# EUROPÄISCHE PATENTSCHRIFT

(11) **EP 4 581 084 B1**
(45) Veröffentlichungstag und Bekanntmachung des Hinweises auf die Patenterteilung: **14.10.2026**
(21) Anmeldenummer: 24719122.4
(22) Anmeldetag: 10.04.2024
(51) Int. Cl.: C09B 69/00, C09B 69/10, G02B 1/04, C08K 5/00, G02B 5/23

(54) **HÖHERMOLEKULARE PHOTOCHROME FARBSTOFFE MIT MINDESTENS EINER UND HÖCHSTENS VIER NAPHTHOPYRAN-UNTEREINHEITEN SOWIE MEHREREN POLYETHER-KETTEN**
HIGHER-MOLECULAR PHOTOCHROMIC DYES HAVING AT LEAST ONE AND NOT MORE THAN FOUR NAPHTHOPYRANE SUBUNITS AND MULTIPLE POLYETHER CHAINS
COLORANTS PHOTOCHROMIQUES À HAUT POIDS MOLÉCULAIRE COMPRENANT AU MOINS UNE ET AU PLUS QUATRE SOUS-UNITÉS DE NAPHTOPYRANE ET PLUSIEURS CHAÎNES DE POLYÉTHER

(30) Priorität: 18.04.2023 DE 102023109737
(43) Veröffentlichungstag der Anmeldung: 09.07.2025
(73) Patentinhaber: Rodenstock GmbH, 80687 München (DE)
(72) Erfinder: HARTL, Andreas, 81375 München (DE); WEIGAND, Udo, 81247 München (DE); ZINNER, Herbert, 85296 Rohrbach (DE)
(74) Vertreter: Müller-Boré & Partner Patentanwälte PartG mbB
(86) Internationale Anmeldenummer: PCT/EP2024/059715
(87) Internationale Veröffentlichungsnummer: WO 2024/217960

(56) Entgegenhaltungen:
- WO-A1-2012/149599
- WO-A1-2012/162725
- WO-A1-2019/238495
- WO-A1-2023/135127
- NINO MALIC ET AL: "The use of poly(alkylene oxide)s to achieve fast and controlled photochromic switching in rigid matrices", JOURNAL OF POLYMER SCIENCE PART A: POLYMER CHEMISTRY, vol. 50, no. 7, 24 January 2012 (2012-01-24), US, pages 1434 - 1444, XP055227241, ISSN: 0887-624X, DOI: 10.1002/pola.25912

## Beschreibung

Die vorliegende Erfindung betrifft neue höhermolekulare photochrome Farbstoffe mit mindestens einer und höchstens vier Naphthopyran-Untereinheiten sowie mehreren Polyether-Ketten, diese enthaltende phototrope Acrylat-, Allylcarbonat-, Harnstoff-, Urethan- oder Thiourethan-Polymere, ein phototropes Produkt sowie die Verwendung dieser photochromen Farbstoffe.

Thiourethan-Polymere sind die mit Abstand weitverbreitetsten Materialien für Kunststoff-Brillengläser mit höheren Brechungsindices von ≥ 1,60. Je höher der Brechungsindex ist, umso dünner kann ein Korrektions-Brillenglas gefertigt werden. Jedoch war es bisher nicht möglich, photochrome Farbstoffe ohne die Verwendung spezieller Additive direkt in Thiourethan-Polymere einzubringen und akzeptable phototrope Eigenschaften (tiefe Eindunklung bei Sonnenbelichtung kombiniert mit schneller Aufhellung nach Belichtungsende) zu generieren. Der Grund dafür ist, dass die dichte, engmaschig dreidimensional vernetzte Polymermatrix der für hochwertige Kunststoff-Brillengläser eingesetzten Thiourethan-Duroplast-Polymere den photochromen Farbstoffen keinerlei Raum für deren reversible Umwandlung - durch langwellige UV-Strahlung induziert - vom farblosen Grundzustand in den eingedunkelten Zustand gibt. Daher dunkeln herkömmliche photochrome Farbstoffe in Thiourethan-Duroplast-Polymeren im Sonnenlicht nicht oder nur vernachlässigbar gering ein. Aus diesem Grund ist die Oberflächenbeschichtung mit photochromen Lacken - vor allem mittels Spin Coating - bisher die Methode der Wahl zur Herstellung phototroper Kunststoff-Brillengläser mit höheren Brechungsindices. Dieses Verfahren hat jedoch den Nachteil, dass dafür aufwendige und teure technische Anlagen nötig sind und nur relativ wenig Produkte pro Zeiteinheit hergestellt werden können, was mit relativ hohen Herstellungskosten einhergeht.

Seit langem sind verschiedene Farbstoffklassen bekannt, die bei Bestrahlung mit langwelligem UV-Licht, insbesondere Sonnenstrahlen, reversibel ihre Farbe wechseln. Dies geht darauf zurück, dass diese photochromen Farbstoffmoleküle durch Lichtenergie von ihrem farblosen Grundzustand ("geschlossene Form") - einhergehend mit einem selektiven Bindungsbruch - in einen eingedunkelten Zustand ("offene Form") übergehen, aus dem sie bei Unterbrechung der Energiezufuhr wieder in den farblosen Grundzustand unter Rückbildung der vorher gebrochenen Bindung zurückkehren. Die für die Anwendung in phototropen Brillengläsern weitverbreitetste Farbstoffklasse sind Naphthopyran-Systeme, insbesondere mit weiteren anellierten aromatischen Ringen, die aufgrund des größeren konjugierten Systems sowohl in der geschlossenen als auch in der offenen farbigen Form längerwellig absorbieren. Zur Anellierung wird üblicherweise ein Benzol-Ring mit einer zusätzlichen Verbrückung in ortho-Stellung eingesetzt. In den hier nachstehend vorgestellten erfindungsgemäßen Verbindungen ist der Benzol-Ring mit den Substituenten R₉ über eine einatomige Brücke (mit den Substituenten R₇ und R₈) oder über eine zweiatomige Brücke (mit den Substituenten R₇, R₈ und R₁₀) anelliert.

Liegt eine einatomige Verbrückung vor, ergibt sich ein an das Naphthopyran anellierter Fünfring ("Indeno-Naphthopyrane"). Beispiele dafür finden sich in EP 0 792 468 sowie EP 0 906 366. In EP 0 912 908, EP 2 457 915, EP 2 471 794, EP 2 684 886, EP 2 788 340 sowie EP 2 872 517 werden Verbindungen beschrieben, bei denen an die Indenonaphthopyran-Kernstruktur mindestens ein weiteres Ringsystem anelliert ist. In der EP 3 807 258 sind zweifach indeno-anellierte Naphthopyran-Systeme beschrieben, die zur Verbesserung der phototropen Eigenschaften längerkettige Polyether-Substituenten aufweisen.

Liegt eine zweiatomige Verbrückung vor, ergibt sich ein an das Naphthopyran anellierter Sechsring ("Dihydronaphtho-Naphthopyrane"), wie in EP 1 119 560, EP 2 829 537 sowie EP 3 010 924 beschrieben. In der bereits vorstehend erwähnten EP 3 807 258 sind auch derartige Verbindungen mit längerkettigen Polyether-Substituenten beschrieben.

WO 2012/162725 A1 und WO 2012/149599 A1 beschreiben photochrome Polymerderivate, umfassend mindestens zwei photochrome Einheiten, die durch ein gerad- oder verzweigtkettiges Polymer verbunden sind, ausgewählt aus der Gruppe, bestehend aus einem Homopolyester, einem Copolyester und einem Copolyester-Polyether.

Der vorliegenden Erfindung liegt somit die Aufgabe zugrunde, neue photochrome Farbstoffe bereitzustellen, deren direkte Einbringung insbesondere in Thiourethan-Duroplast-Polymere zu phototropen Polymeren führen sollen, die sich durch hervorragende phototrope Eigenschaften auszeichnen, ohne dass es zwingend irgendwelcher spezieller Additive bedarf. Mit Hilfe der neuen photochromen Farbstoffe sollen hervorragende phototrope Eigenschaften (extrem tiefe Eindunklung bei Sonnenbelichtung kombiniert mit extrem schneller Aufhellung nach Belichtungsende) matrixunabhängig realisierbar werden, und zwar nicht nur im High Index-Bereich, sondern auch für Low Index-Gläser.

Diese Aufgabe wird durch die in den Ansprüchen gekennzeichneten Gegenstände gelöst.

Der vorliegenden Erfindung liegt die überraschende Feststellung zugrunde, dass bestimmte photochrome Farbstoff-Moleküle mit mehreren Polyether-Ketten an unterschiedlichen Stellen des Moleküls, welches zwischen einer und vier Naphthopyran-Untereinheiten enthält, exzellente matrixunabhängige phototrope Eigenschaften in Kunststoff-Brillengläsern aller Art zeigen, und zwar im Gegensatz zu Systemen mit nur einer Naphthopyran-Untereinheit und einer Polyether-Kette, wie in der vorstehend erwähnten EP 3 807 258 beschrieben. Darüber hinaus wird dies ohne die Notwendigkeit des Einsatzes spezieller Additive erreicht, ohne deren Hilfe Farbstoffe mit nur einer Naphthopyran-Untereinheit und einem längerkettigen Polyether-Substituenten nur inakzeptable phototrope Eigenschaften in engmaschig vernetzten Thiourethan-Duroplast-Polymeren zeigen.

In der EP 2 714 767 sind photochrome Farbstoffe mit zwei (oder mehr) Naphthopyran-Untereinheiten beschrieben, die durch eine hochmolekulare Polyester-Kette miteinander verbunden sind. Darüber hinaus sind in der EP 2 705 071 photochrome Farbstoffe mit zwei (oder mehr) Naphthopyran-Untereinheiten beschrieben, die durch hochmolekulare Polymer-Ketten verschiedenster Art miteinander verbunden sind. Die in diesen beiden Druckschriften beschriebenen Verbindungen zeigen jedoch ebenfalls nur mit zusätzlichem Additiv-Einsatz akzeptable phototrope Eigenschaften in Thiourethan-Duroplast-Polymeren, da sie nur eine lineare Polymer-Kette enthalten. Im Gegensatz dazu sind bei den erfindungsgemäßen Verbindungen die Naphthopyran-Untereinheiten - im Falle von mehr als einer davon im Molekül - nur durch relativ kurze Linker miteinander verbunden, während mehrere höhermolekulare Polyether-Ketten jeweils "außen" am Molekül angebracht sind. Dadurch können diese längerkettigen Polyether-Substituenten die photochromen Naphthopyran-Untereinheiten sehr effizient einkapseln und so komplett von der jeweiligen Kunststoffglas-Polymermatrix abschirmen. Damit ist es erstmals möglich, matrixunabhängig hervorragende phototrope Eigenschaften zu realisieren - auch in engmaschig vernetzten Thiourethan-Duroplast-Polymeren.

Erfindungsgemäß werden somit neue höhermolekulare photochrome Farbstoffe mit mindestens einer und höchstens vier Naphthopyran-Untereinheiten sowie mehreren Polyether-Ketten gemäß der nachfolgenden Formel ( I ) bereitgestellt: 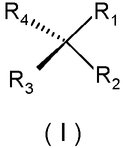
mit der Maßgabe (1), dass mindestens einer und höchstens vier der Reste R₁, R₂, R₃ bzw. R₄ unabhängig voneinander folgende Gruppierung A mit einem endständigen längerkettigen Polyether-Substituenten darstellt bzw. darstellen: 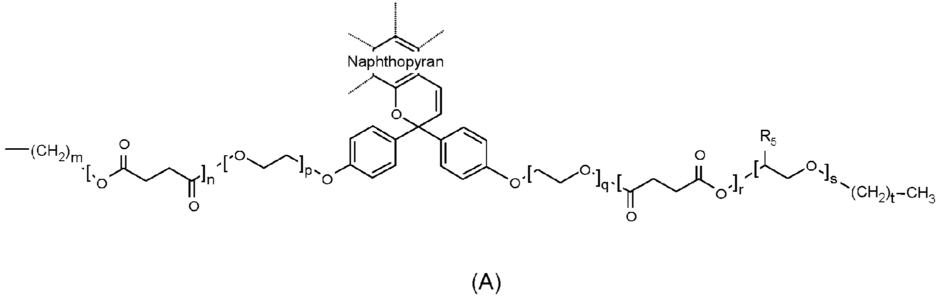
und die verbleibenden Reste R₁, R₂, R₃ bzw. R₄ unabhängig voneinander Wasserstoff, einen Methyl-Rest, einen Ethyl-Rest, einen Phenyl-Rest oder die folgende Gruppierung B mit einem längerkettigen Polyether-Substituenten darstellen: 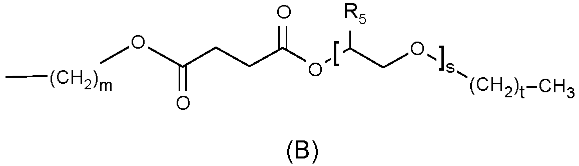
wobei im Falle von nur einer Gruppierung A im Molekül mindestens einer der verbleibenden Reste die Gruppierung B darstellen muss;
oder mit der Maßgabe (2), dass mindestens einer und höchstens zwei der Reste R₁, R₂, R₃ bzw. R₄ unabhängig voneinander folgende Gruppierung C darstellt bzw. darstellen: 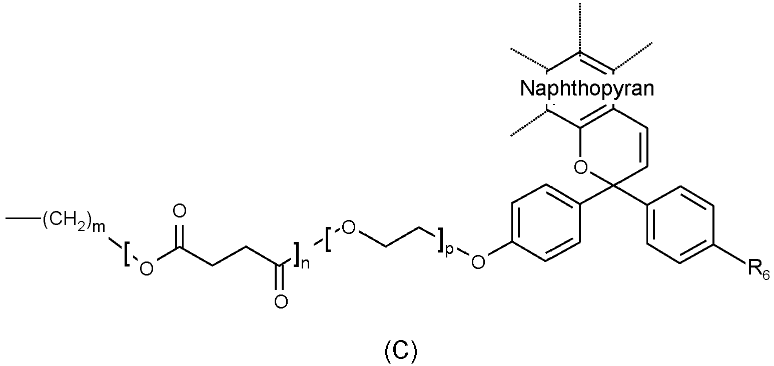
und von den verbleibenden Resten R₁, R₂, R₃ bzw. R₄ mindestens zwei die Gruppierung B darstellen, wobei im Falle eines weiteren verbleibenden Restes dieser aus Wasserstoff, einem Methyl-Rest, einem Ethyl-Rest oder einem Phenyl-Rest ausgewählt werden kann;
worin m, n, p, q und r jeweils unabhängig voneinander eine ganze Zahl von 0 bis 1 darstellen, s eine ganze Zahl von 5 bis 50 darstellt sowie t eine ganze Zahl von 0 bis 3 darstellt,
wobei der stilisierte Benzol-Ring mit Inschrift "Naphthopyran" eine der vier folgenden diskreten Naphthopyran-Untereinheiten "1" - "4" darstellt: 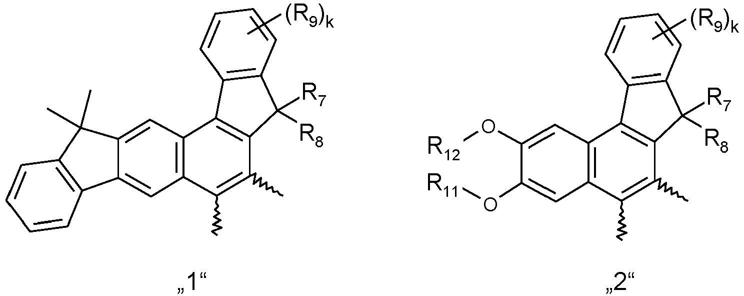 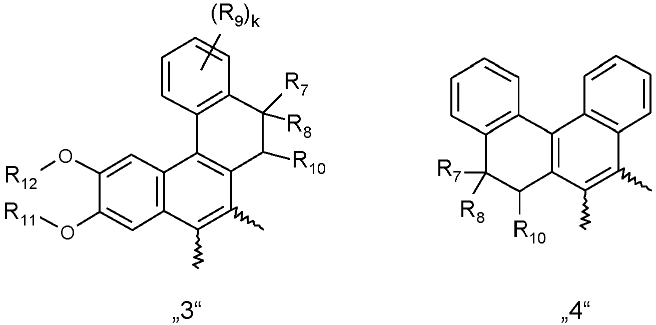 und wobei die vorstehenden Substituenten R₅, R₆, R₇, R₈, R₉, R₁₀, R₁₁ und R₁₂ wie in Anspruch 1 definiert sind:
   Ein weiterer Gegenstand der vorliegenden Erfindung betrifft phototrope Acrylat-, Allylcarbonat-, Harnstoff-, Urethan- oder Thiourethan-Polymere, umfassend einen oder mehrere der vorstehenden photochromen Farbstoffe.

Die vorliegende Erfindung betrifft zudem insbesondere auch ein phototropes Produkt auf Basis eines solchen Thiourethan-Polymers, welches ein Zweikomponenten-System ist, bei dem eine 0,1 mm bis 1 mm dünne phototrope Polythiourethan-Funktionsschicht auf Basis des Thiourethan-Polymers auf einem Polymer-Grundkörper anpolymerisiert ist, oder ein Sandwich-System ist, bei dem eine 0,1 mm bis 1 mm dünne phototrope Polythiourethan-Funktionsschicht auf Basis des Thiourethan-Polymers zwischen zwei Polymer-Körpern angeordnet ist.

Noch ein weiterer Gegenstand der vorliegenden Erfindung betrifft die Verwendung der erfindungsgemäßen photochromen Farbstoffe zur Einbringung in Thiourethan-Polymere, insbesondere für ophthalmische Zwecke, in Linsen und Gläsern für Brillen aller Art, wie beispielsweise Korrektionsbrillen, Autofahrer-Brillen, Skibrillen, Sonnenbrillen, Motorradbrillen, für Visiere von Schutzhelmen und dergleichen und für Sonnenschutz-Zwecke in Fahrzeugen und im Baubereich, in Form von Fenstern, Schutzblenden, Abdeckungen, Dächern und dergleichen.

Die erfindungsgemäßen Verbindungen zeichnen sich dadurch aus, dass sich die photochromen Naphthopyran-Untereinheiten in räumlicher Nähe zu zwei oder mehreren Polyether-Ketten befinden. Durch die Anordnung dieser Untereinheiten um ein zentrales, tetraedrisches Kohlenstoffatom ist es möglich, dass sich das Gesamtsystem räumlich von der Polymermatrix abkapseln kann. Diese räumliche Abschirmung der phototropen Naphthopyran-Untereinheiten mit Hilfe der längerkettigen Polyether-Substituenten ermöglicht erstmals matrixunabhängige phototrope Eigenschaften, worunter insbesondere verstanden wird, dass mit den erfindungsgemäßen Verbindungen phototrope Eigenschaften sowohl in Thiourethanen, Urethanen, Harnstoffen, Acrylaten als auch in Allylcarbonaten erhalten werden können.

Bisher müssen zur Erzielung guter phototroper Eigenschaften entweder speziell angepasste Polymer-Matrices verwendet werden, die eine weniger engmaschige Vernetzung - einhergehend mit geringerer Härte - aufweisen, oder es müssen spezielle Additive zugesetzt werden. Diese Additive bilden zusammen mit den Farbstoffen Domänensysteme aus, welche die Polymermatrix lokal aufweichen. Allerdings ist die Ausbildung dieser Domänen sehr materialspezifisch und nur in bestimmten Polymermatrices realisierbar. Der spezielle Aufbau der erfindungsgemäßen Verbindungen hingegen ermöglicht es den längerkettigen Polyether-Substituenten, sich in der räumlichen Nähe des Pyran-Ringes der photochromen Naphthoypyran-Untereinheiten anzuordnen. Dies ist die Stelle der größten strukturellen Veränderung während der photochromen Umschaltung beim Öffnen zur farbigen Form bzw. beim Schließen zurück zur farblosen Form. Aufgrund der losen Anordnung ("Random Coil") der linearen Polyether-Ketten mit nur geringen intramolekularen Wechselwirkungen wird dieses Öffnen und Schließen des photochromen Zentrums nicht behindert. Die photochromen Eigenschaften der erfindungsgemäßen Farbstoffe können somit auch in hochgradig quervernetzten Polymermatrices wie Thiourethan-Polymeren realisiert werden.

Durch den speziellen Aufbau der Farbstoffe und ihrer "Abschottung" von der sie umgebenden Polymermatrix lässt sich mit den erfindungsgemäßen photochromen Farbstoffen eine hervorragende Eindunklung bei Sonnenbelichtung sowie eine extrem schnelle Aufhellung nach Belichtungsende realisieren.

Die Verbindung der Naphthopyran-Untereinheiten zum zentralen, tetraedrischen Kohlenstoffatom der Formel ( I ) erfolgt entweder direkt (für n = p = 0), über eine Succinyloxy-Brücke (für n = 1 und p = 0) oder über eine Ethylenoxy-Succinyloxy-Brücke (für n = p = 1).

Die Verwendung einer Succinyloxy-Brücke ist insofern vorteilhaft, als dass Esterbindungen bei Verwendung moderner Kupplungsreagenzien bei sehr milden Reaktionstemperaturen (einschließlich Raumtemperatur) geknüpft werden können, d.h. ohne thermische Belastung des Moleküls bei Erhitzen und dadurch auftretende thermische Zersetzungsreaktionen. Andere Kupplungsreaktionen wie z.B. Williamson-Ethersynthesen erfordern höhere Reaktionstemperaturen und drastischere Reaktionsbedingungen (z.B. Einsatz starker Basen).

Die Verwendung einer Ethylenoxy-Brücke zwischen der Naphthopyran-Untereinheit und der Succinyloxy-Brücke ist in der Regel dann nötig, wenn eine noch höhere Aufhellgeschwindigkeit erzielt werden soll. Die Aufhellung aus dem eingedunkelten Zustand ist im Allgemeinen für Naphthopyran-Systeme umso schneller, je besser die Elektronendonor-Eigenschaft der Substituenten an den beiden Benzol-Ringen ist, welche an das Kohlenstoffatom neben dem Pyran-Sauerstoff gebunden sind. Daher ist es vorteilhaft, zwei stark elektronenschiebende Alkoxy-Substituenten einzusetzen, da der Acyloxy-Substituent einer Succinyloxy-Brücke direkt an der Naphthopyran-Untereinheit ein zu schwacher Elektronendonor ist und dadurch oftmals eine zu geringe Aufhellgeschwindigkeit resultiert. Gleiches gilt jeweils für eine Succinyloxy-Brücke (für r = 1) als Verbindung zwischen der Naphthopyran-Untereinheit und dem längerkettigen Polyether-Substituenten bei den erfindungsgemäßen Verbindungen, für welche die Maßgabe (1) gilt.

Erfindungsgemäße Verbindungen, für welche die Maßgabe (1) gilt, weisen zwischen einer und vier Naphthopyran-Untereinheiten sowie insgesamt (verteilt über die Gruppierungen A und B) zwei bis vier längerkettige Polyether-Substituenten auf. Letztere sind jeweils über optionale Ethylenoxy- (für q = 1) und Succinyloxy-Brücken (für r = 1) mit den benachbarten Naphthopyran-Untereinheiten verbunden oder hängen bei weniger als vier Naphthoypran-Untereinheiten im Molekül optional zusätzlich direkt am zentralen, tetraedrischen Kohlenstoffatom der Formel ( I ), und zwar als Gruppierung B verbunden über eine Succinyloxy-Brücke. Diese nicht-optionale Succinyloxy-Brücke in der Gruppierung B ist wiederum aus synthetischen Gründen vorhanden. Die Ankupplung der längerkettigen Polyether-Substituenten mit dem zentralen, tetraedrischen Kohlenstoffatom gelingt hier über Ester-Brücken unter sehr milden Reaktionsbedingungen.

Erfindungsgemäße Verbindungen, für welche die Maßgabe (2) gilt, weisen entweder eine oder zwei Naphthopyran-Untereinheiten sowie entweder zwei oder drei längerkettige Polyether-Substituenten auf. Letztere sind jeweils über das zentrale, tetraedrische Kohlenstoffatom als Gruppierung B mit den Naphthopyran-Untereinheiten verbunden. Im Gegensatz zur Maßgabe (1) sind hier keine weiteren längerkettigen Polyether-Substituenten an die Naphthopyran-Untereinheiten gebunden, sondern nur "kleinere" Substituenten R₆, mit deren Hilfe sich Eindunklungsfarbe sowie Aufhellgeschwindigkeit beeinflussen lassen.

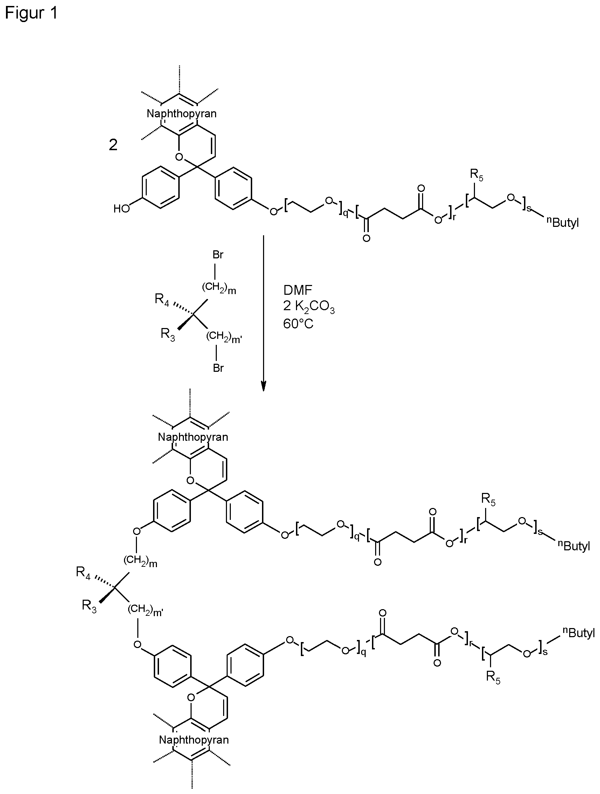

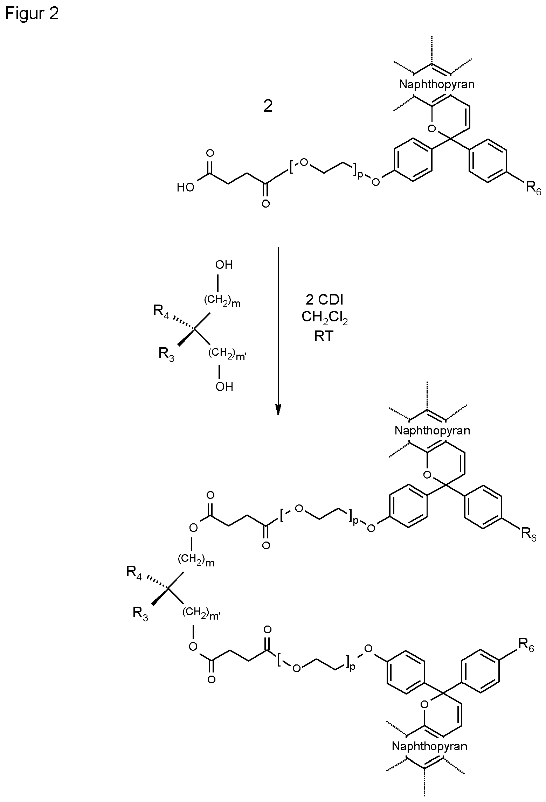

Zur Synthese der erfindungsgemäßen Verbindungen können geeignete, prinzipiell aus dem Stand der Technik bekannte Naphthopyran-Ausgangsverbindungen eingesetzt werden und beispielsweise mit 1,3-difunktionellen Propan-Derivaten (für m = m' = 1) gemäß Figuren 1 und 2 zu Molekülen mit jeweils zwei Naphthopyran-Untereinheiten und mindestens zwei längerkettigen Polyether-Substituenten umgesetzt werden.

**Figur 1** zeigt ein Syntheseschema der erfindungsgemäßen Verbindungen mit zwei Naphthopyran-Untereinheiten, für welche die Maßgabe (1) gilt.

Als Ausgangsverbindungen dienen hierbei Naphthopyrane mit jeweils einem 4-Hydroxy-Substituenten an einem der beiden Benzol-Ringe, welche an das Kohlenstoffatom neben dem Pyran-Sauerstoff gebunden sind, sowie einem über optionale Ethylenoxy- (für q = 1) und Succinyl-oxy-Brücken (für r = 1) verbundenen längerkettigen Polyether-Substituenten am anderen Benzol-Ring. Als Polyether-Substituenten sind vor allem im Handel erhältliche längerkettige Polypropylenglykol-monobutylether geeignet, aber auch Polypropylenglykol/Polyethylenglykol-Copolymere mit Monoalkyl-Cap. Die Kettenlängen weisen dabei jeweils eine Gauss-Verteilung auf, d.h. es liegen Gemische mit unterschiedlichen Kettenlängen vor, die um ein Maximum herum verteilt sind. Die kovalente Kupplung von zwei Molekülen dieser Naphthopyran-Ausgangsverbindungen über ein zentrales, tetraedrisches Kohlenstoffatom wird mittels einer Williamson-Ethersynthese unter Verwendung von 1,3-Dibrompropan-Derivaten (für m = m' = 1) durchgeführt. Stattdessen kann hierzu aber auch 1,2-Dibromethan (für R₃ = R₄ = H, m = 1 und m' = 0) eingesetzt werden.

Setzt man 2-(Brommethyl)-1,3-dibrompropan-Derivate ein (R₃ = CH₂Br), lassen sich drei Moleküle der Naphthopyran-Ausgangsverbindungen zu erfindungsgemäßen Verbindungen mit drei Naphthopyran-Untereinheiten umsetzen. Entsprechend erhält man mit Bis(2-brommethyl)-1,3-dibrompropan (R₃ = R₄ = CH₂Br) und vier Molekülen der Naphthopyran-Ausgangverbindungen erfindungsgemäße Verbindungen mit vier Naphthopyran-Untereinheiten.

**Figur 2** zeigt ein Syntheseschema der erfindungsgemäßen Verbindungen, für welche die Maßgabe (2) gilt,

Als Ausgangsverbindungen dienen hierbei Naphthopyran-Ausgangsverbindungen mit einem 4-Succinyloxy-Substituenten und optionaler Ethylenoxy-Brücke (für p = 1) an einem der beiden Benzol-Ringe, welche an das Kohlenstoffatom neben dem Pyran-Sauerstoff gebunden sind, sowie dem para-Substituenten R₆ am anderen Benzol-Ring. Die kovalente Kupplung von zwei Molekülen dieser Naphthopyran-Ausgangsverbindungen über ein zentrales, tetraedrisches Kohlenstoffatom erfolgt mittels einer milden Estersynthese unter Verwendung von 1,1'-Carbonyldiimidazol (CDI) und 1,3-Propandiol-Derivaten, welche zwei längerkettige Polyether-Substituenten (R₃ = R₄ = Gruppierung B) aufweisen. Diese 2,2-substituierten 1,3-Propandiol-Derivate sind aus dem kostengünstigen Vorprodukt Pentaerythritol relativ leicht zugänglich.

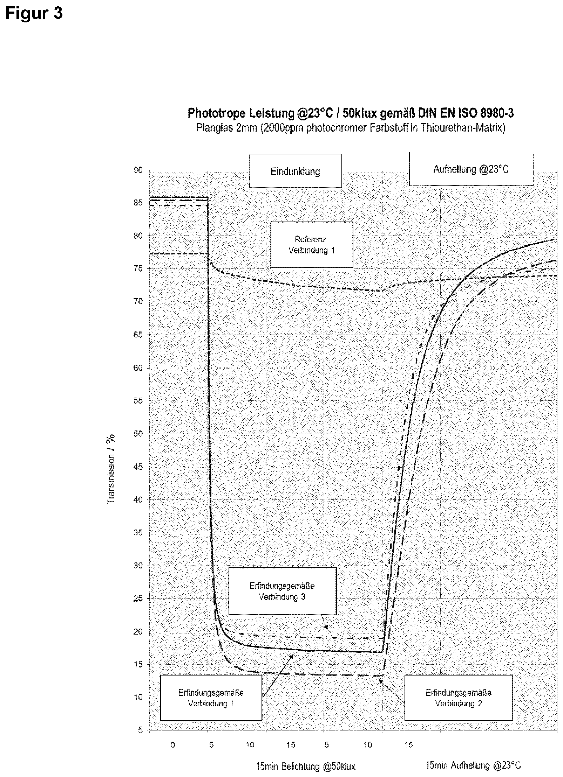

**Figur 3** zeigt einen Vergleich der phototropen Leistung dreier erfindungsgemäßer Verbindungen mit einer passenden Referenz-Verbindung aus dem Stand der Technik (EP 3 807 258). Die Verbindungen weisen alle die Naphthoypran-Untereinheit "1" auf - die anderen beanspruchten Naphthopyran-Untereinheiten verhalten sich absolut analog bei derartigen Vergleichen. Die Transmissionsdaten in Figur 3 stammen aus Messungen, durchgeführt gemäß der Norm DIN EN ISO 8980-3 bei 23°C.

Für die Messungen wurden Polythiourethan-Scheiben mit einer Dicke von 2 mm verwendet. Diese wurden hergestellt, indem die photochromen Farbstoffe jeweils in einem flüssigen, für hochwertige Kunststoff-Brillengläser geeigneten Monomer-Gemisch, bestehend aus Isocyanaten und Thiolen, gelöst wurden und nach Zusatz eines üblichen Sn-Katalysators in einer Form thermisch polymerisiert wurden.

Die konkreten Molekülstrukturen der in der Figur 3 dargestellten Verbindungen sind in Tabelle 1 aufgeführt. Die erfindungsgemäßen Verbindungen 1 und 2 leiten sich aus der Formel 1, Maßgabe 1, ab, die erfindungsgemäße Verbindung 3 aus Formel 1, Maßgabe 2.

### Tabelle 1:

| Verbindung | Strukturformel | Substituenten |
|---|---|---|
| Referenz-Verbindung (Stand der Technik) | 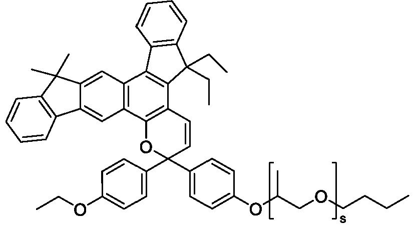 | s ≈ 16 (Gauss Verteilung) |
| Erfindungsgemäße Verbindung 1 | 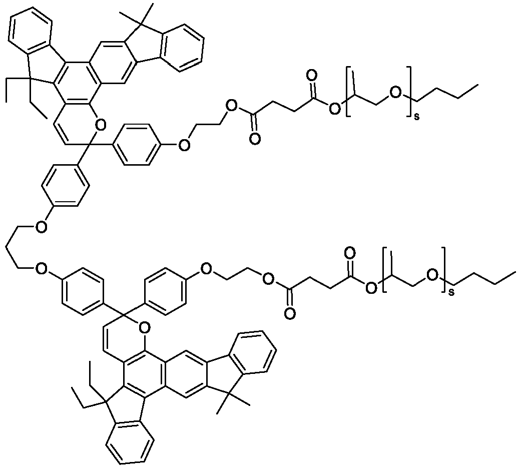 | Gemäß Formel 1, Maßgabe 1: |
| | | R₃ = R₄ = H |
| | | R₁ = R₂ = Gruppierung A mit |
| | | m = 1, n = 0, p = 0, q = 1, |
| | | r = 1, s ≈ 16 (Gauss Verteilung), |
| | | t = 3, |
| | | R₅ = Methyl. |
| | | Naphthopyran "1": |
| | | R₇ = R₈ = Ethyl; k=0 |
| Erfindungsgemäße Verbindung 2 | 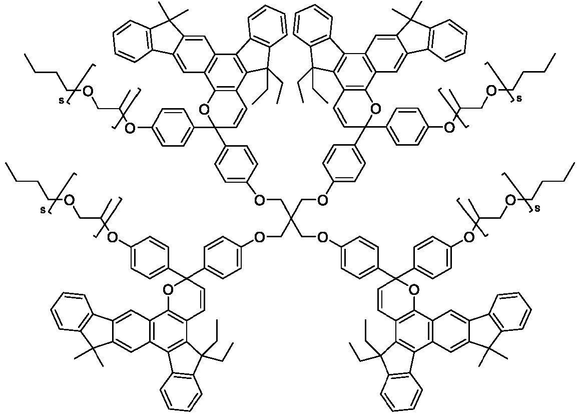 | Gemäß Formel 1, Maßgabe 1: |
| | | R₁ = R₂ = R₃ = R₄ = |
| | | Gruppierung A mit |
| | | m = 1, n = 0, p =0, q = 0, |
| | | r = 0, s ≈ 16 (Gauss Verteilung), |
| | | t = 3, |
| | | R₅ = Methyl. |
| | | Naphthopyran "1": |
| | | R₇ = R₈ = Ethyl; k=0 |
| Erfindungsgemäße Verbindung 3 | 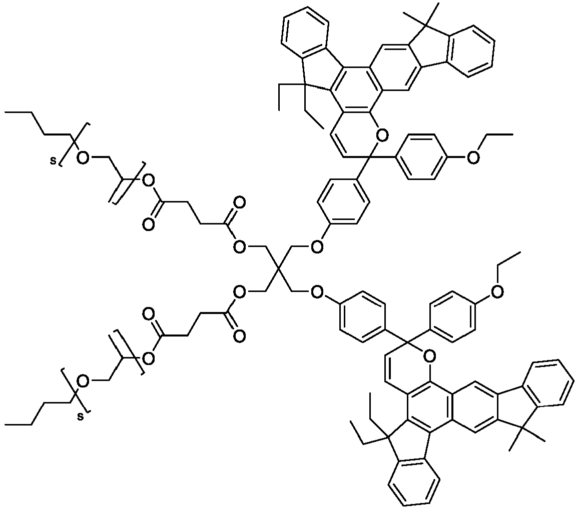 | Gemäß Formel 1, Maßgabe 2: |
| | | R₁ = R₂ = Gruppierung C mit |
| | | m = 1, n = 0, p = 0, R₆ = Ethoxy |
| | | R₃ = R₄ = Gruppierung B mit |
| | | m = 1, s ≈ 16 (Gauss Verteilung), |
| | | t = 3, |
| | | R₅ = Methyl. |
| | | Naphthopyran "1": |
| | | R₇ = R₈ = Ethyl; k=0 |

Die erfindungsgemäße Verbindung 1 in Tabelle 1 verfügt über zwei Naphthopyran-Untereinheiten, welche über eine 1,3-Propandiolbrücke verbunden sind. Die Polypropylenglykol-Ketten an jeder der Naphthopyran-Untereinheiten sind über eine Glykol- und eine Succinyloxybrücke angebunden.

Die erfindungsgemäße Verbindung 2 in Tabelle 1 verfügt über vier Naphthopyran-Untereinheiten, welche über eine Pentaerythritholbrücke verbunden sind. Die Polypropylenglykol-Ketten an jeder Naphthopyran-Untereinheit sind direkt über eine Etherbindung an die Naphthopyran-Untereinheiten gebunden.

Die erfindungsgemäße Verbindung 3 in Tabelle 1 verfügt über zwei Naphthopyran-Untereinheiten, welche an ein Pentaerythrithol-Zentralmolekül gebunden sind. An die anderen beiden Alkoholgruppen des Pentaerythrithols ist jeweils eine Polypropylenglykol-Kette über eine Succinyloxybrücke angebunden.

Die Referenz-Verbindung hingegen weist nur eine Polypropylenglykol-Kette und eine Naphthopyran-Untereinheit auf und spiegelt somit den Stand der Technik wieder. Die Naphthopyran-Untereinheit ist hierbei identisch zu denen der erfindungsgemäßen Verbindungen 1-3.

Durch die in Figur 3 dargestellten Ergebnisse wird klar, dass die genaue Struktur der Naphthopyran-Untereinheit für die vorliegende Erfindung nur eine untergeordnete Rolle spielt. Die Referenz-Verbindung zeigt praktisch keine phototropen Eigenschaften und nur eine minimale Veränderung der Transmission nach Bestrahlung mit UV-Licht. Nur durch Verwendung stark angepasster Matrices oder spezieller Additive können die phototropen Eigenschaften solcher Verbindungen entfaltet werden.

Im Gegensatz dazu zeigen die erfindungsgemäßen Verbindungen 1, 2 und 3 eine gute Eindunklungstiefe mit Transmissionswerten unter 20% im voll angeregten Zustand. Die Anordnung mehrerer Naphthopyran-Untereinheiten und Polyetherketten um ein gemeinsames Zentrum garantiert hier eine optimale Umgebung für die Farbstoffe und ermöglicht somit die Entfaltung photochromer Eigenschaften auch in nicht dafür optimierten Polythiourethanpolymeren, und zwar ganz ohne die Verwendung von speziellen Additiven.

Darüber hinaus zeigt die Referenz-Verbindung einen relativ geringen Transmissionswert im nicht angeregten Zustand von nur etwa 77%. Dies deutet auf ein Vorliegen der offenen, farbigen Form der photochromen Farbstoffe hin, welche keine Möglichkeit haben, in den farblosen Grundzustand zurückzukehren. Durch die erfindungsgemäßen Verbindungen 1, 2 und 3 wurde dieses Problem ebenfalls behoben, da die Farbstoffe ohne Beleuchtung nicht an der Rückreaktion in den farblosen Grundzustand gehindert werden, und somit eine deutlich höhere Transmission im aufgehellten Zustand erreicht werden kann.

Die erfindungsgemäßen Verbindungen 1, 2 und 3 zeigen zudem ein sehr schnelles Aufhellungsverhalten.

Diese exzellenten phototrope Eigenschaften (hohe Transmission im aufgehellten Zustand, tiefe Eindunklung bei Belichtung sowie sehr schnelle Aufhellung) lassen sich nicht nur in Polythiourethan-Matrices realisieren, sondern auch in anderen für den Einsatz in Kunststoff-Brillengläser geeigneten Matrices, wie Polyurethane, Poly(meth)acrylate oder Polyallylcarbonate. Damit werden erstmals photochrome Farbstoff-Systeme bereitgestellt, die eine derartige Matrixunabhängigkeit - ohne Zusatz weiterer Additive - zeigen.

## Patentansprüche

1. Photochrome Farbstoffe mit mindestens einer und höchstens vier Naphthopyran-Untereinheiten sowie mehreren Polyether-Ketten gemäß der nachfolgenden Formel ( I ) 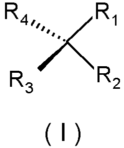
mit der Maßgabe (1), dass mindestens einer und höchstens vier der Reste R₁, R₂, R₃ bzw. R₄ unabhängig voneinander folgende Gruppierung A mit einem endständigen längerkettigen Polyether-Substituenten darstellt bzw. darstellen: 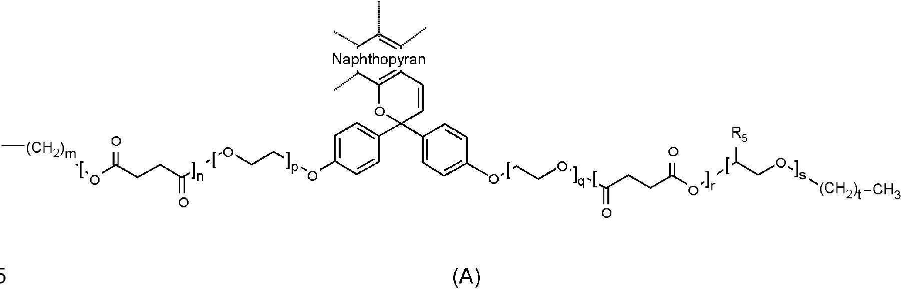
und die verbleibenden Reste R₁, R₂, R₃ bzw. R₄ unabhängig voneinander Wasserstoff, einen Methyl-Rest, einen Ethyl-Rest, einen Phenyl-Rest oder die folgende Gruppierung B mit einem längerkettigen Polyether-Substituenten darstellen: 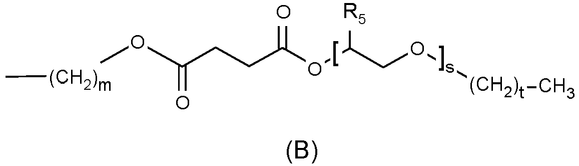
wobei im Falle von nur einer Gruppierung A im Molekül mindestens einer der verbleibenden Reste die Gruppierung B darstellen muss;
oder mit der Maßgabe (2), dass mindestens einer und höchstens zwei der Reste R₁, R₂, R₃ bzw. R₄ unabhängig voneinander folgende Gruppierung C darstellt bzw. darstellen: 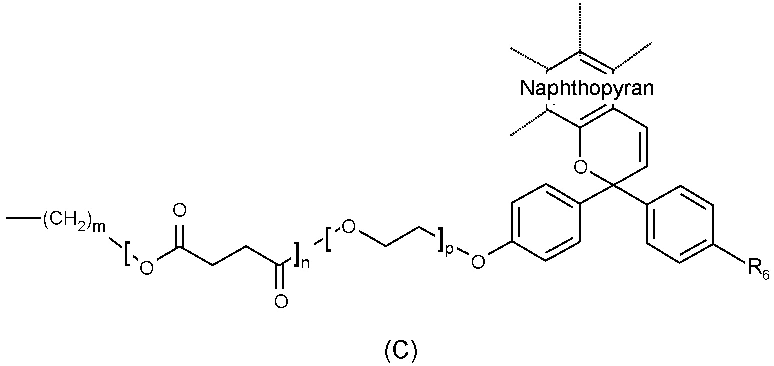
und von den verbleibenden Resten R₁, R₂, R₃ bzw. R₄ mindestens zwei die Gruppierung B darstellen, wobei im Falle eines weiteren verbleibenden Restes dieser aus Wasserstoff, einem Methyl-Rest, einem Ethyl-Rest oder einem Phenyl-Rest ausgewählt werden kann;
worin m, n, p, q und r jeweils unabhängig voneinander eine ganze Zahl von 0 bis 1 darstellen, s eine ganze Zahl von 5 bis 50 darstellt sowie t eine ganze Zahl von 0 bis 3 darstellt,
worin der Rest R₅ in der sich wiederholenden Einheit der Kettenlänge s jeweils unabhängig voneinander Wasserstoff oder einen Methyl-Rest darstellt;
worin der Rest R₆ einen Substituenten darstellt, ausgewählt aus Wasserstoff, Fluor, einem (C₁-C₆)-Alkyl-Rest, einem (C₃-C₇)-Cycloalkyl-Rest, einem (C₁-C₆)-Thioalkyl-Rest, einem (C₁-C₆)-Alkoxy-Rest, einem Trifluormethyl-Rest, einem Phenyl-Rest, einem 4-Methoxyphenyl-Rest, einem Phenoxy-Rest, einem 4-Methoxyphenoxy-Rest, einem Benzyl-Rest, einem 4-Methoxybenzyl-Rest, einem Benzyloxy-Rest, einem 4-Methoxybenzyloxy-Rest, einem Biphenyl-Rest, einem Biphenyloxy-Rest, einem Naphthyl-Rest, einem Naphthoxy-Rest, einem Piperidinyl-Rest, einem 3,5-Dimethylpiperidinyl-Rest, einem Morpholinyl-Rest, einem 2,6-Dimethylmorpholinyl-Rest, einem Thiomorpholinyl-Rest, einem Azacycloheptyl-Rest, einem Indolinyl-Rest, einem 1,2,3,4-Tetrahydrochinolinyl-Rest, einem 1,2,3,4-Tetrahydroisochinolinyl-Rest, einem Diphenylamino-Rest, einem ((C₁-C₆)-Alkoxyphenyl)-phenylamino-Rest, einem Bis((C₁-C₆)-alkoxyphenyl)amino-Rest, einem 10,10-Dimethyl-9,10-dihydroacridin-Rest, einem Phenothiazinyl-Rest, einem Phenoxazinyl-Rest, einem Phenazinyl-Rest, einem Carbazolyl-Rest, einem 1,2,3,4-Tetrahydrocarbazolyl-Rest oder einem 10,11-Dihydro-dibenz[b,f]azepinyl-Rest;
wobei der stilisierte Benzol-Ring mit Inschrift "Naphthopyran" eine der vier folgenden diskreten Naphthopyran-Untereinheiten "1" - "4" darstellt: 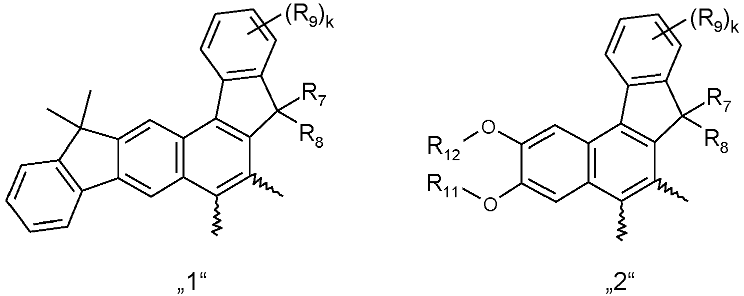 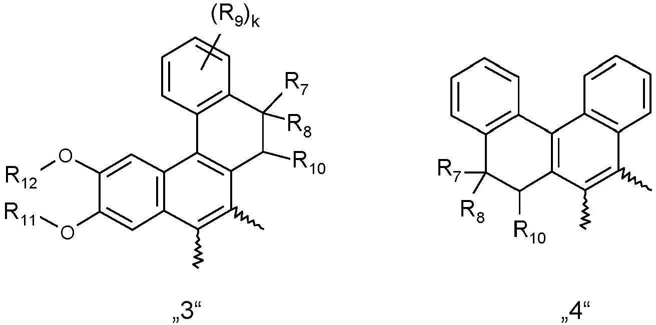
worin die Reste R₇, R₈ und R₁₀ jeweils unabhängig voneinander einen Substituenten darstellen, ausgewählt aus einem (C₁-C₆)-Alkyl-Rest oder einem Phenyl-Rest;
die Reste R₉ jeweils unabhängig voneinander einen Substituenten darstellen, ausgewählt aus einem (C₁-C₆)-Alkyl-Rest, einem (C₃-C₇)-Cycloalkyl-Rest, einem (C₁-C₆)-Alkoxy-Rest, einem Benzyl-Rest oder einem un- oder monosubstituierten Phenyl-Rest, wobei der Substituent aus Fluor, einem (C₁-C₆)-Alkyl-Rest oder einem (C₁-C₆)-AlkoxyRest ausgewählt sein kann; und wobei k 0, 1 oder 2 darstellt;
oder zwei benachbarte Reste R₉ zusammen einen anellierten Benzol-Ring bilden, der un-, mono- oder disubstituiert sein kann, wobei die Substituenten aus einem (C₁-C₆)-Alkyl-Rest, einem (C₁-C₆)-Alkoxy-Rest, einem Phenyl-Rest oder einem Benzyl-Rest ausgewählt sein können;
oder zwei benachbarte Reste R₉ zusammen ein anelliertes Naphthalin-Ringsystem, ein anelliertes Benzofuran-Ringsystem, ein anelliertes Benzothiophen-Ringsystem, ein anelliertes 3,3-Dimethylinden-Ringsystem oder ein anelliertes 2H-Chromen-Ringsystem bilden;
und die Reste R₁₁ und R₁₂ jeweils unabhängig voneinander einen Substituenten darstellen, ausgewählt aus Wasserstoff, einem (C₁-C₆)-Alkyl-Rest, einem (C₃-C₇)-Cycloalkyl-Rest, einem Trifluormethyl-Rest, einem Benzyl-Rest oder einem un- oder monosubstituierten Phenyl-Rest, wobei der Substituent aus Fluor, einem (C₁-C₆)-Alkyl-Rest oder einem (C₁-C₆)-Alkoxy-Rest ausgewählt sein kann;
oder die Reste R₁₁ und R₁₂ zusammen die Gruppierung -(CH₂)ⱼ- darstellen, wobei j eine ganze Zahl von 1 bis 3 darstellt; mit der Maßgabe, dass, wenn dieser Zahlenwert 2 oder 3 ist, an zwei benachbarten CH₂-Gruppen auch ein Benzol-Ring anelliert sein kann.

2. Photochrome Farbstoffe gemäß Anspruch 1, wobei die Farbstoffe durch die Maßnahme (1) gekennzeichnet sind.

3. Photochrome Farbstoffe gemäß Anspruch 1, wobei die Farbstoffe durch die Maßnahme (2) gekennzeichnet sind.

4. Photochrome Farbstoffe gemäß einem der Ansprüche 1 bis 3, wobei der stilisierte Benzol-Ring mit Inschrift "Naphthopyran" aus einer der vorstehenden Naphthopyran-Untereinheiten "1", "2" oder "3" ausgewählt ist.

5. Photochrome Farbstoffe gemäß einem der Ansprüche 1 bis 4, wobei die Reste R₉ jeweils unabhängig voneinander einen Substituenten darstellen, ausgewählt aus einem (C₁-C₆)-Alkyl-Rest, einem (C₃-C₇)-Cycloalkyl-Rest, einem (C₁-C₆)-Alkoxy-Rest, einem Benzyl-Rest oder einem un- oder monosubstituierten Phenyl-Rest, wobei der Substituent aus Fluor, einem (C₁-C₆)-Alkyl-Rest oder einem (C₁-C₆)-Alkoxy-Rest ausgewählt sein kann; und wobei k 0, 1 oder 2 darstellt.

6. Photochrome Farbstoffe gemäß einem der Ansprüche 1 bis 5, wobei die Reste R₁₁ und R₁₂ jeweils unabhängig voneinander einen Substituenten darstellen, ausgewählt aus Wasserstoff, einem (C₁-C₆)-Alkyl-Rest, einem (C₃-C₇)-Cycloalkyl-Rest, einem Benzyl-Rest oder einem un- oder monosubstituierten Phenyl-Rest, wobei der Substituent aus Fluor, einem (C₁-C₆)-Alkyl-Rest oder einem (C₁-C₆)-Alkoxy-Rest ausgewählt sein kann.

7. Phototrope Acrylat-, Allylcarbonat-, Harnstoff-, Urethan- oder Thiourethan-Polymere, umfassend einen oder mehrere der photochromen Farbstoffe gemäß einem der Ansprüche 1 bis 6.

8. Phototropes Produkt auf Basis eines Thiourethan-Polymers gemäß Anspruch 7, welches ein Zweikomponenten-System ist, bei dem eine 0,1 mm bis 1 mm dünne phototrope Polythiourethan-Funktionsschicht auf Basis des Thiourethan-Polymers auf einem Polymer-Grundkörper anpolymerisiert ist, oder ein Sandwich-System ist, bei dem eine 0,1 mm bis 1 mm dünne phototrope Polythiourethan-Funktionsschicht auf Basis des Thiourethan-Polymers zwischen zwei Polymer-Körpern angeordnet ist.

9. Verwendung der photochromen Farbstoffe gemäß einem der Ansprüche 1 bis 6 zur Einbringung in Thiourethan-Polymere, insbesondere für ophthalmische Zwecke, in Linsen und Gläsern für Brillen aller Art, wie beispielsweise Korrektionsbrillen, Autofahrer-Brillen, Skibrillen, Sonnenbrillen, Motorradbrillen, für Visiere von Schutzhelmen und dergleichen und für Sonnenschutz-Zwecke in Fahrzeugen und im Baubereich, in Form von Fenstern, Schutzblenden, Abdeckungen, Dächern und dergleichen.

## Claims

1. Photochromic dyes with at least one and at most four naphthopyran subunits and multiple polyether chains according to the following formula (I): 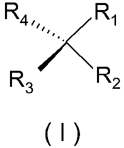
on the proviso (1) that at least one and at most four of the radicals R₁, R₂, R₃, and R₄, independently of one another, represent the following group A with a terminal, longer-chain polyether substituent: 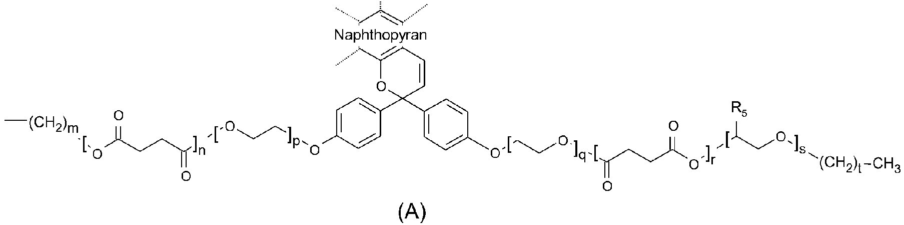
and the remaining radicals R₁, R₂, R₃, and R₄, independently of one another, represent hydrogen, a methyl radical, an ethyl radical, a phenyl radical, or the following group B with a longer-chain polyether substituent: 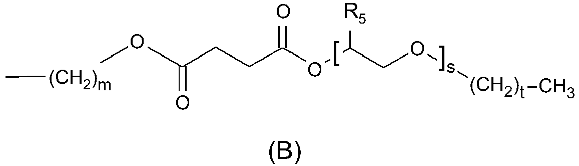
wherein, in the case of only one group A in the molecule, at least one of the remaining radicals must represent the group B;
or on the proviso (2) that at least one and at most two of the radicals R₁, R₂, R₃, and R₄, independently of one another, represent the following group C: 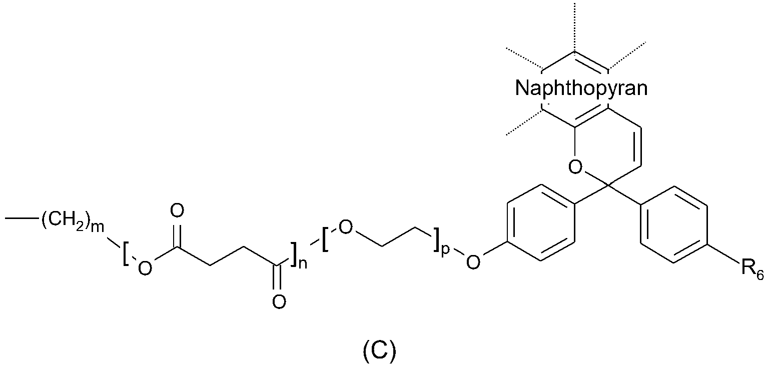
and of the remaining radicals R₁, R₂, R₃, and R₄, at least two represent the group B, wherein in the case of a further remaining radical, it can be selected from hydrogen, a methyl radical, an ethyl radical, or a phenyl radical;
wherein m, n, p, q, and r, independently of one another, represent an integer from 0 to 1, s represents an integer from 5 to 50, and t represents an integer from 0 to 3,
wherein the radical R₅ in the repeating unit of chain length s, independently of one another, represent hydrogen or a methyl radical;
wherein the radical R₆ represents a substituent selected from hydrogen, fluorine, a (C₁-C₆)-alkyl radical, a (C₃-C₇)-cycloalkyl radical, a (C₁-C₆)-thioalkyl radical, a (C₁-C₆)-alkoxy radical, a trifluoromethyl radical, a phenyl radical, a 4-methoxyphenyl radical, a phenoxy radical, a 4-methoxyphenoxy radical, a benzyl radical, a 4-methoxybenzyl radical, a benzyloxy radical, a 4-methoxybenzyloxy radical, a biphenyl radical, a biphenyloxy radical, a naphthyl radical, a naphthoxy radical, a piperidinyl radical, a 3,5-dimethylpiperidinyl radical, a morpholinyl radical, a 2,6-dimethylmorpholinyl radical, a thiomorpholinyl radical, an azacycloheptyl radical, an indolinyl radical, a 1,2,3,4-tetrahydroquinolinyl radical, a 1,2,3,4-tetrahydroisoquinolinyl radical, a diphenylamino radical, a ((C₁-C₆)-alkoxyphenyl)-phenylamino radical, a bis((C1-C6)-alkoxyphenyl)amino radical, a 10,10-dimethyl-9,10-dihydroacridine radical, a phenothiazinyl radical, a phenoxazinyl radical, a phenazinyl radical, a carbazolyl radical, a 1,2,3,4-tetrahydrocarbazolyl radical, or a 10,11-dihydro-dibenz[b,f]azepinyl radical;
wherein the stylized benzene ring inscribed "naphthopyran" represents one of the four following discrete naphthopyran subunits "1" - "4": 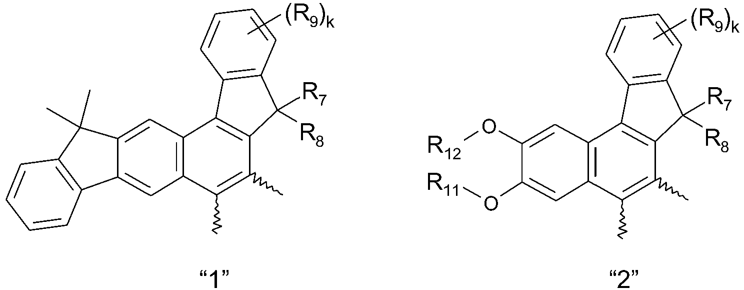 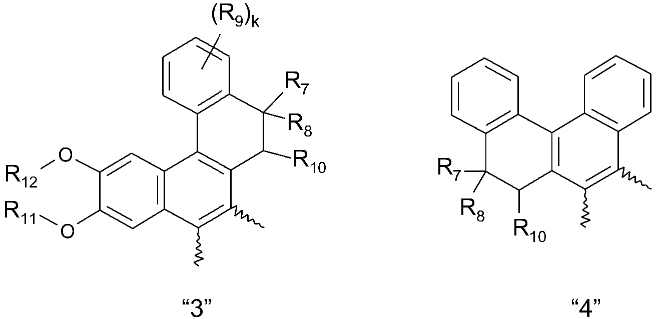
wherein the radicals R₇, R₈, and R₁₀, independently of one another, represent a substituent selected from a (C₁-C₆)-alkyl radical or a phenyl radical;
the radicals R₉, independently of one another, represent a substituent selected from a (C₁-C₆)-alkyl radical, a (C₃-C₇)-cycloalkyl radical, a (C₁-C₆)-alkoxy radical, a benzyl radical, or an unsubstituted or monosubstituted phenyl radical, wherein the substituent can be selected from fluorine, a (C₁-C₆)-alkyl radical, or a (C₁-C₆) alkoxy radical; and wherein k represents 0, 1, or 2;
or two adjacent R₉ radicals together form an annelated benzene ring, which can be unsubstituted, monosubstituted, or disubstituted, wherein the substituents can be selected from a (C₁-C₆)-alkyl radical, a (C₁-C₆)-alkoxy radical, a phenyl radical, or a benzyl radical;
or two adjacent R₉ radicals together form an annelated naphthalene ring system, an annelated benzofuran ring system, an annelated benzothiophene ring system, an annelated 3,3-dimethylindene ring system, or an annelated 2H-chromene ring system;
and the radicals R₁₁ and R₁₂, independently of one another, represent a substituent selected from hydrogen, a (C₁-C₆)-alkyl radical, a (C₃-C₇)-cycloalkyl radical, a trifluoromethyl radical, a benzyl radical, or an unsubstituted or monosubstituted phenyl radical, wherein the substituent can be selected from fluorine, a (C₁-C₆)-alkyl radical, or a (C₁-C₆)-alkoxy radical;
or the radicals R₁₁ and R₁₂ together represent the group -(CH₂)ⱼ-, wherein j represents an integer from 1 to 3; on the proviso that if this numerical value is 2 or 3, a benzene ring may also be annelated to two adjacent CH₂ groups.

2. Photochromic dyes according to claim 1, wherein the dyes are **characterized by** proviso (1).

3. Photochromic dyes according to claim 1, wherein the dyes are **characterized by** proviso (2).

4. Photochromic dyes according to one of claims 1 to 3, wherein the stylized benzene ring inscribed "naphthopyran" is selected from one of the above naphthopyran subunits "1", "2", or "3".

5. Photochromic dyes according to one of claims 1 to 4, wherein the radicals R₉, independently of one another, represent a substituent selected from a (C₁-C₆)-alkyl radical, a (C₃-C₇)-cycloalkyl radical, a (C₁-C₆)-alkoxy radical, a benzyl radical, or an unsubstituted or monosubstituted phenyl radical, wherein the substituent can be selected from fluorine, a (C₁-C₆)-alkyl radical, or a (C₁-C₆)-alkoxy radical; and wherein k represents 0, 1, or 2.

6. Photochromic dyes according to one of claims 1 to 5, wherein the radicals R₁₁ and R₁₂, independently of one another, represent a substituent selected from hydrogen, a (C₁-C₆)-alkyl radical, a (C₃-C₇)-cycloalkyl radical, a benzyl radical, or an unsubstituted or monosubstituted phenyl radical, wherein the substituent may be selected from fluorine, a (C₁-C₆)-alkyl radical, or a (C₁-C₆)-alkoxy radical.

7. Phototropic acrylate, allyl carbonate, urea, urethane, or thiourethane polymers comprising one or more of the photochromic dyes according to one of claims 1 to 6.

8. Phototropic product based on a thiourethane polymer according to claim 7, which is a two-component system in which a 0.1 mm to 1 mm thin phototropic polythiourethane functional layer based on the thiourethane polymer is polymerized onto a polymer base body, or is a sandwich system in which a 0.1 mm to 1 mm thin phototropic polythiourethane functional layer based on the thiourethane polymer is arranged between two polymer bodies.

9. Use of the photochromic dyes according to one of claims 1 to 6 for incorporation into thiourethane polymers, in particular for ophthalmic purposes, in lenses and glasses for spectacles of all kinds, such as corrective spectacles, driving spectacles, ski goggles, sunglasses, motorcycle goggles, for visors of protective helmets, and the like, and for sun protection purposes in vehicles and in the construction sector, in the form of windows, protective visors, covers, roofs, and the like.

## Revendications

1. Colorants photochromiques comprenant au moins un et au plus quatre motifs naphtopyrane et plusieurs chaînes polyéther selon la formule (I) suivante: 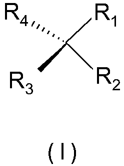
à condition (1) qu'au moins un et au plus quatre des radicaux R₁, R₂, R₃ et R₄, indépendamment les uns des autres, représentent le groupe A suivant comportant un substituant polyéther à chaîne longue terminale: 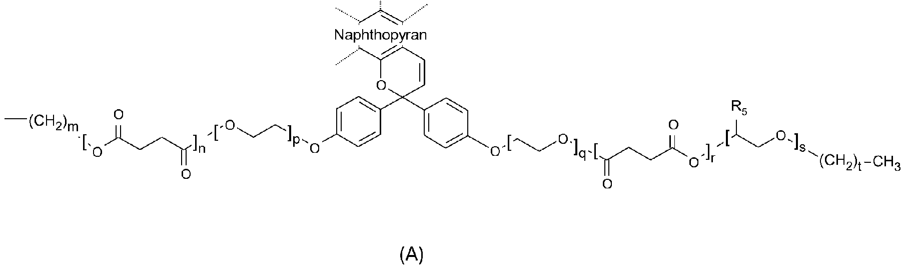
et que les radicaux R₁, R₂, R₃ et R₄ restants, indépendamment les uns des autres, représentent un atome d'hydrogène, un radical méthyle, un radical éthyle, un radical phényle ou le groupe B suivant comportant un substituant polyéther à chaîne longue: 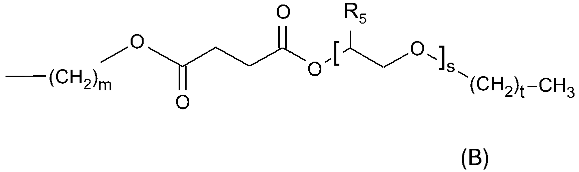
dans lequel, dans le cas où une seule groupe A est présent dans la molécule, au moins l'un des radicaux restants doit représenter le groupe B;
ou à condition (2) qu'au moins un et au plus deux des radicaux R₁, R₂, R₃ et R₄, indépendamment les uns des autres, représentent le groupe C suivant: 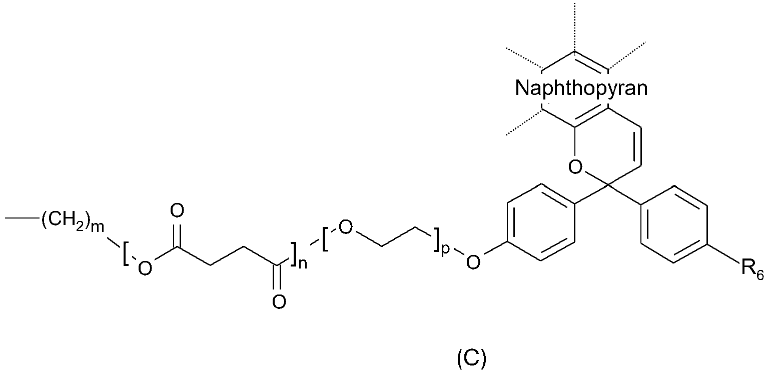
et que, parmi les radicaux R₁, R₂, R₃ et R₄ restants, au moins deux représentent le groupe B, dans lequel, dans le cas d'un radical restant supplémentaire, celui-ci peut être choisi parmi l'hydrogène, un radical méthyle, un radical éthyle ou un radical phényle;
dans lequel m, n, p, q et r, indépendamment les uns des autres, représentent un nombre entier de 0 à 1, s représente un nombre entier de 5 à 50 et t représente un nombre entier de 0 à 3,
dans lequel le radical R₅ dans l'unité répétitive de longueur de chaîne s, indépendamment les uns des autres, représente un atome d'hydrogène ou un radical méthyle;
dans lequel le radical R₆ représente un substituant choisi parmi l'hydrogène, le fluor, un radical alkyle en (C₁-C₆), un radical cycloalkyle en (C₃-C₇), un radical thioalkyle en (C₁-C₆), un radical alcoxy en (C1-C6), un radical trifluorométhyle, un radical phényle, un radical 4-méthoxyphényle, un radical phénoxy, un radical 4-méthoxyphénoxy, un radical benzyle, un radical 4-méthoxybenzyle, un radical benzyloxy, un radical 4-méthoxybenzyloxy, un radical biphényle, un radical biphényloxy, un radical naphtyle, un radical naphtoxy, un radical pipéridinyle, un radical 3,5-diméthylpipéridinyle, un radical morpholinyle, un radical 2,6-diméthylmorpholinyle, un radical thiomorpholinyle, un radical azacycloheptyle, un radical indolinyle, un radical 1,2,3,4-tétrahydroquinolinyle, un radical 1,2,3,4-tétrahydroisoquinolinyle, un radical diphénylamino, un radical ((alcoxy(C₁-C₆)phényl)-phénylamino, un radical bis((alcoxy(C₁-C₆)phényl)amino, un radical 10,10-diméthyl-9,10-dihydroacridine, un radical phénothiazinyle, un radical phénoxazinyle, un radical phénazinyle, un radical carbazolyle, un radical 1,2,3,4-tétrahydrocarbazolyle ou un radical 10,11-dihydro-dibenzo[b,f]azépinyle;
dans lequel le cycle benzénique représenté schématiquement et portant l'inscription « naphtopyrane » représente l'un des quatre motifs naphtopyranes distincts suivants "1" - "4": 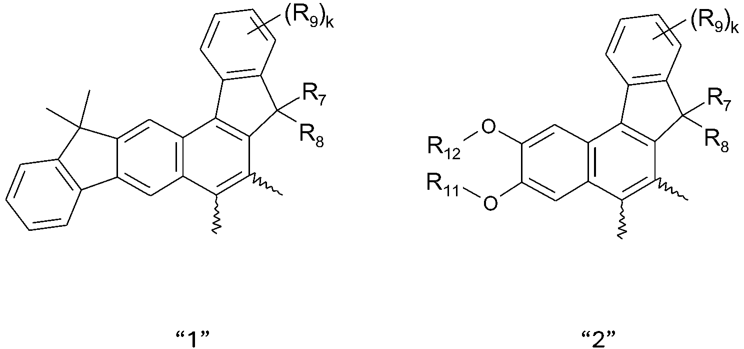 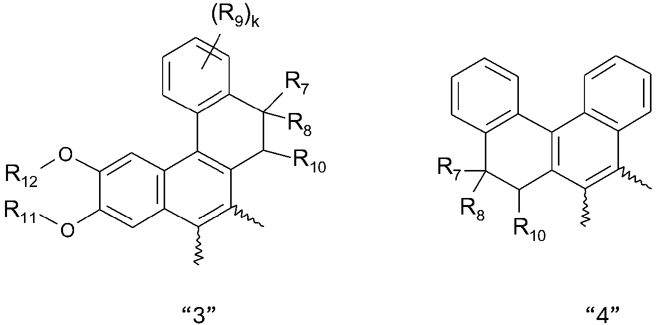
dans lequel les radicaux R₇, R₈ et R₁₀, indépendamment les uns des autres, représentent un substituant choisi parmi un radical alkyle en (C₁-C₆) ou un radical phényle;
les radicaux R₉, indépendamment les uns des autres, représentent un substituant choisi parmi un radical alkyle en (C₁-C₆), un radical cycloalkyle en (C₃-C₇), un radical alcoxy en (C₁-C₆), un radical benzyle ou un radical phényle non substitué ou monosubstitué, dans lequel le substituant peut être choisi parmi le fluor, un radical alkyle en (C₁-C₆) ou un radical alcoxy en (C₁-C₆); et dans lequel k représente 0, 1 ou 2;
ou deux radicaux R₉ adjacents forment ensemble un cycle benzénique annelé, qui peut être non substitué, monosubstitué ou disubstitué, les substituants pouvant être choisis parmi un radical alkyle en (C₁-C₆), un radical alcoxy en (C₁-C₆), un radical phényle ou un radical benzyle;
ou deux radicaux R₉ adjacents forment ensemble un système cyclique naphtalénique annelé, un système cyclique benzofurannique annelé, un système cyclique benzothiophénique annelé, un système cyclique 3,3-diméthylindène annelé ou un système cyclique 2H-chromène annelé;
et les radicaux R₁₁ et R₁₂, indépendamment les uns des autres, représentent un substituant choisi parmi l'hydrogène, un radical alkyle en (C₁-C₆), un radical cycloalkyle en (C₃-C₇), un radical trifluorométhyle, un radical benzyle ou un radical phényle non substitué ou monosubstitué, le substituant pouvant être choisi parmi le fluor, un radical alkyle en (C₁-C₆) ou un radical alcoxy en (C₁-C₆);
ou les radicaux R₁₁ et R₁₂ représentent ensemble le groupe -(CH₂)j-, dans lequel j représente un nombre entier de 1 à 3 ; à condition que, si cette valeur numérique est de 2 ou 3, un cycle benzénique puisse également être annelé aux deux groupes CH₂ adjacents.

2. Colorants photochromiques selon la revendication 1, dans lesquels les colorants sont **caractérisés par** la condition (1).

3. Colorants photochromiques selon la revendication 1, dans lesquels les colorants sont **caractérisés par** la condition (2).

4. Colorants photochromiques selon l'une quelconque des revendications 1 à 3, dans lesquels le cycle benzénique représenté schématiquement et portant l'inscription « naphtopyrane » est choisi parmi l'un des motifs naphtopyranes "1", "2" ou "3" précités.

5. Colorants photochromiques selon l'une quelconque des revendications 1 à 4, dans lesquels les radicaux R₉, indépendamment les uns des autres, représentent un substituant choisi parmi un radical alkyle en (C₁-C₆), un radical cycloalkyle en (C₃-C₇), un radical alcoxy en (C₁-C₆), un radical benzyle ou un radical phényle non substitué ou monosubstitué, dans lequel le substituant peut être choisi parmi le fluor, un radical alkyle en (C₁-C₆) ou un radical alcoxy en (C₁-C₆) ; et dans lequel k représente 0, 1 ou 2.

6. Colorants photochromiques selon l'une quelconque des revendications 1 à 5, dans lesquels les radicaux R₁₁ et R₁₂, indépendamment les uns des autres, représentent un substituant choisi parmi l'hydrogène, un radical alkyle en (C₁-C₆), un radical cycloalkyle en (C₃-C₇), un radical benzyle ou un radical phényle non substitué ou monosubstitué, le substituant pouvant être choisi parmi le fluor, un radical alkyle en (C₁-C₆) ou un radical alcoxy en (C₁-C₆).

7. Polymères phototropes d'acrylate, de carbonate d'allyle, d'urée, d'uréthane ou de thiouréthane comprenant un ou plusieurs des colorants photochromiques selon l'une quelconque des revendications 1 à 6.

8. Produit phototrope à base d'un polymère de thiouréthane selon la revendication 7, qui est un système à deux composants dans lequel une couche fonctionnelle phototrope de polythiouréthane d'une épaisseur de 0,1 mm à 1 mm, à base du polymère de thiouréthane, est polymérisée sur un corps de base polymère, ou qui est un système sandwich dans lequel une couche fonctionnelle phototrope de polythiouréthane d'une épaisseur de 0,1 mm à 1 mm, à base du polymère de thiouréthane, est disposée entre deux corps polymères.

9. Utilisation des colorants photochromiques selon l'une quelconque des revendications 1 à 6 pour leur incorporation dans des polymères de thiouréthane, notamment à des fins ophtalmiques, dans des lentilles et des verres pour lunettes de toutes sortes, tels que des lunettes correctrices, des lunettes de conduite, des lunettes de ski, des lunettes de soleil, des lunettes de motocyclisme, pour des visières de casques de protection et analogues, et à des fins de protection solaire dans les véhicules et dans le secteur de la construction, sous la forme de fenêtres, visières de protection, couvercles, toitures et analogues.
